(19) Europäisches Patentamt
European Patent Office
Office européen des brevets

(11) EP 1 885 799 B1

# (12) EUROPEAN PATENT SPECIFICATION

(45) Date of publication and mention of the grant of the patent:
**06.01.2010 Bulletin 2010/01**

(21) Application number: **05734798.1**

(22) Date of filing: **27.04.2005**

(51) Int Cl.:
***C08L 61/06*** *(2006.01)* ***C08J 9/00*** *(2006.01)*
***C08K 5/12*** *(2006.01)*

(86) International application number:
**PCT/IE2005/000045**

(87) International publication number:
**WO 2006/114777 (02.11.2006 Gazette 2006/44)**

## (54) PLASTICISER FOR PHENOLIC FOAM, AND A PROCESS FOR PRODUCING PHENOLIC FOAM

WEICHMACHER FÜR PHENOLSCHAUMSTOFF UND VERFAHREN ZUR HERSTELLUNG VON PHENOLSCHAUMSTOFF

PLASTIFIANT POUR MOUSSE PHENOLIQUE ET PROCEDE DE PRODUCTION DE LA MOUSSE PHENOLIQUE

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(43) Date of publication of application:
**13.02.2008 Bulletin 2008/07**

(73) Proprietor: **Kingspan Holdings (IRL) Limited**
**Kingscourt,**
**County Cavan (IE)**

(72) Inventor: **ZEGGELAAR, Ruud**
**NL-6814 JK Arnheim (NL)**

(74) Representative: **O'Brien, John Augustine et al**
**John A. O'Brien & Associates**
**Third Floor,**
**Duncairn House,**
**14 Carysfort Avenue**
**Blackrock, Co Dublin (IE)**

(56) References cited:
**EP-A- 0 579 321 GB-A- 758 562**

- **PATENT ABSTRACTS OF JAPAN vol. 2003, no. 11, 5 November 2003 (2003-11-05) & JP 2003 183439 A (ASAHI KASEI CORP), 3 July 2003 (2003-07-03) cited in the application**
- **R. GÄCHTER & H. MÜLLER: "Taschenbuch der Kunststoff-Additive (3. Ausgabe)" 1989, CARL HANSER VERLAG , XP002339521 pages 412-415; table 14**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 885 799 B1

## Description

Introduction

The invention relates to a plasticiser for phenolic foam, phenolic foam products and a process for producing phenolic foam using the said plasticiser. This invention relates more especially, to a plasticiser which gives improved flexibility to the cell walls of phenolic foam, inhibits degradation of the phenolic foam with time, and improves thermal insulation performance. Furthermore, this invention relates to phenolic foam with improved thermal ageing performance and a process for producing the said phenolic foam.

Phenolic foam is used in insulation applications for construction materials because of its superior thermal insulation and fire resistance characteristics. It is known that the thermal conductivity of polymeric thermal insulation materials including phenolic foam can change with time. This phenomenon is caused by the gradual diffusion of gas from inside the foam cells. The gas present inside the foam cells has its origin in the blowing agent used in the foaming process. This gas in the foam cells is slowly replaced by air from the atmosphere. Correspondingly, the thermal conductivity of the phenolic foam increases with time.

It is highly desirable to achieve long-term stability for the thermal insulation performance of phenolic foam. It is believed that one of the causes for the degradation of thermal insulation performance is the reduction in the flexibility of the cell walls of phenolic foam with time. Therefore, an object of the present invention is to impart flexibility to the cell walls of phenolic foam as a means of stabilising the thermal conductivity of phenolic foam over an extended time period.

It is known from JP-A-59-62615 that triphenyl phosphate, dimethyl terephthalate, or dimethyl isophthalate can be added to phenolic resin and used as a plasticiser for reducing the viscosity of phenolic resin. The use of an ethoxylated castor oil as a surfactant for improving the characteristic of cell walls is described in JP-A-2003-183439. These modifications together are still unsatisfactory in controlling the degradation over time of the foam cell-walls. Using such plasticisers and surfactants does not achieve long-term thermal insulation stability for the foam.

GB-A-758,562 describes cellular phenolaldehyde resins.

EP-A-0579321 describes a process for producing a mainly closed cell foam by curing in the presence of perfluro-N-methylmopholine.

An objective of the present invention is to provide a plasticiser for phenolic foam that imparts flexibility to the cell-walls of the phenolic foam, inhibits celt-wall degradation with time and improves long-term thermal insulation stability performance. Additionally, further objectives of the present invention are to provide superior phenolic foam with the said desirable characteristics in which the plasticiser is included and also a process for efficiency producing the said phenolic foam.

Statements of Invention

According to the invention overcomes the above stated problems by providing phenolic foam with polyester polyol as a plasticiser.

The invention provides a phenolic foam comprising a polyester polyol as a plasticiser wherein the polyester polyol is the reaction product of a dibasic carboxylic acid with a dihydric alcohol expressed in general formula (I)

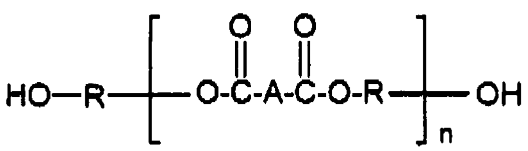

··· (I)

wherein A is a dicarboxylic acid residue containing up to two hydrogen atoms from a dibasic carboxylic acid, and R is a chemical backbone of a dihydric alcohol having up to two hydroxyl groups from a dihydric alcohol, and n is an integer equal to or more than 1, **characterised in that** the polyester polyol is the reaction product of phthalic acid and an alcohol selected from diethylene glycol, ethylene glycol, and 1, 4 - butane diol.

The phenolic foam may comprise 0.1 to 20 parts by weight of the plasticiser per 100 parts by weight of the phenolic foam

In one embodiment the moisture permeability coefficient for a thickness of 25mm is not more than 60 ng/($m^2$.s.Pa).

The invention further provides a process for producing phenolic foam by preparing a foamable phenolic resin composition that comprises phenolic resin, surfactant, plasticiser, blowing agent, and catalyst, delivering the resin composition onto a continuously running substrate, and passing through a heated zone to produce phenolic foam as the phenolic foam is moulded into a predetermined shape, wherein the phenolic foam comprises a plasticiser of the invention.

The plasticiser of the invention imparts flexibility to the cell walls of the phenolic foam, inhibits degradation over time of the cell walls and improves long-term thermal insulation stability. Additionally, there is provided superior phenolic foam with these properties in which the plasticiser is included, and a process for efficiently producing the phenolic foam.

Detailed Description

The invention will be more clearly understood from the following description thereof given by way of example only.

The plasticiser of the present invention is a polyester polyol that is obtained from a reaction of a polybasic carboxylic acid with a polyhydric alcohol. In terms of imparting flexibility to the cell walls of phenolic foam, the molecular weight of the plasticiser is especially not limited. However, a polyester polyol having a weight average molecular weight from 200 to 10,000, particularly from 200 to 5,000, is preferable. The polyhydric alcohol used preferably has at least two hydroxyl groups in a molecule. The number of hydroxyl groups in a molecule of the polyhydric alcohol used is at least more than 1.
The number of carboxyl groups in a molecule of the said polybasic carboxylic acid is at least more than 1.

The polyester polyol of the present invention is for example, a reaction product of a polybasic carboxylic acid selected from a dibasic to a tetrabasic carboxylic acid with a polyhydric alcohol selected from a dihydric to a pentahydric alcohol. A product expressed in the formula (I) is preferable, wherein A is a dicarboxylic acid residue originally containing up to two hydrogen atoms from a dibasic carboxylic acid, and R is a chemical backbone of a dihydric alcohol originally containing up to two hydroxyl groups from a dihydric alcohol, and n is an integer equal to or more than 1.

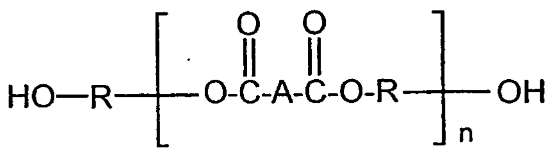

· · · (I)

In the general formula (1), a preferable dibasic carboxylic acid forming the residue A is an aromatic dicarboxylic acid, an aliphatic dicarboxylic acid or an alicyclic dicarboxylic acid, which preferably include phthalic acid, isophthalic acid, terephthalic acid, naphthalene-2,3-dicarboxylic acid, naphthalene-1,4-dicarboxylic acid, napththalene-2,6-dicarboxylic acid, adipic acid, pimeric acid, suberic acid, azelaic acid, sebacic acid, cyclohexane-1,2-dicarboxylic acid, cyclohexane-1,3-dicarboxylic acid, cyclohexane-1,4-dicarboxylic acid and the like.

The dihydric alcohol that may be used to form the chemical backbone R include an aromatic glycol, an aliphatic glycol or an alicyclic glycol which preferably includes ethylene glycol, diethylene glycol, propylene glycol, dipropylene glycol, 1,4-butane diol, 1,5-pentane diol, 1,6-hexane diol, neopentyl glycol, 1,2-cyclohexane dimethanol, 1,3-cyclohexane dimethanol, and 1,4-cyclohexane dimethanol, in which an aliphatic glycol and an alicyclic glycol are especially preferable.

The aromatic glycols that may be used to form the chemical backbone R include, for example, methylolated benzene compounds such as benzene-1,2-dimethanol, benzene-1,3-dimethanol, benzene-1,4-dimethanol, and an addition compound of catechol, resorcinol, hydroquinone, 2,2-bis(4-hydroxyphenyl)propane (bisphenol A) and the like with ethylene oxide or propylene oxide. If the chemical backbone R is based on an aliphatic glycol, then R may include an ether bond (-O-) and / or an ester bond (-COO-) in the chemical backbone of the aliphatic glycol. For example, an alkane diol such as ethylene glycol, propylene glycol, 1,3-propane diol, 1,2-butane diol, 1,4-butane diol, 1,5-pentane diol, 1,6-hexane diol, 1,8-octane diol, 1,9-nonane diol and so on; an oxyalkylene glycol such as diethylene glycol, triethylene glycol, polyethylene glycol, dipropylene glycol, tripropylene glycol, polypropylene glycol and so on; a polyester diol as a ring opening compound of a lactone such as β-butyrolactone, γ-butyrolactone, δ-valerolactone with an oxyethylene glycol such as ethylene glycol, diethylene glycol, triethylene glycol; and a hindered glycol such as 2,2-dimethyl-1,3-propane diol (neopentyl glycol), 2,2-diethyl-1,3-propane diol, 2,2-dipropyl-1,3-propane diol, 2,2-diisopropyl-1,3-propane diol, 2,2-dibutyl-1,3-propane diol, 2,2-diisobutyl-1,3-propane diol, 2-methyl-2-dodecyl-1,3-propane diol, 2-butyl-2-ethyl-1,3-propane diol, 2-propyl-2-pentyl-1,3-propane diol and the like.

An alicyclic glycol includes, for example, cyclopentane-1,2-diol, cyclepentane-1, 2-dimethanol, cyclohexane-1,2-diol, cyclohexane-1,3-diol, cyclohexane-1,4-diol, cyclopentane-1,4-dimethano1,2,5-norbornane diol and the like.

In the present invention, the use of an aliphatic glycol and an alicyclic glycol as a dihydric alcohol are preferable in which ethylene glycol, diethylene glycol, propylene glycol, dipropylene glycol, 1,4-butane diol, 1,6-hexane diol, neopentyl glycol, cyclohexane-1,2-dimethanol, cyclohexane-1,3-dimethanol and cyclohexane 1, 4 dimethanol are especially preferable.

The n in the general formula (I) is an integer equal to or more than 1, and the weight average molecular weight of the compound expressed in the general formula (I) is preferably from 200 to 10,000, and more preferably from 200 to 5,000.

The plasticiser for phenolic foam that mainly contains the compound expressed in the general formula (I) can be manufactured by the esterification reaction of one mole of the said dicarboxylic acid with more than 1.2 moles of the said dihydric alcohol, preferably of from 1.2 to 5 moles, more preferably of from 1.5 to 5 moles; usually at a temperature from 100 to 320°C, preferably at 150 to 300°C. It is preferable that the esterification reaction is carried out under an inert atmosphere such as nitrogen gas, or the reaction may be carried out under reduced pressure. An optional non-aqueous solvent such as toluene or xylene which is able to form an azeotrope with water may be used.

An esterification catalyst is usually used in the above-mentioned esterification reaction. The esterification catalyst includes, for example, a Bronsted acid such as paratoluenesulfonic acid, sulphuric acid and phosphoric acid; a Lewis acid such as a boron trifluoride complex, stannic chloride (IV), or titanium tetrachloride; an organometallic compound such as calcium acetate, zinc acetate, manganese acetate, zinc stearate, oxyalkyl tin, or titanium alkoxide; a metal oxide such as tin oxide, antimony oxide, titanium oxide, or vanadium oxide. Monobutyl tin oxide and tetra-n-butyl ortho titanate are preferable in terms of stability to oxidation for the polyester polyol obtained.

Another esterification reaction includes the following: a process for reacting the said dicarboxylic acid with the said dihydric alcohol, the transesterification of reacting a lower alkyl ester, (the number of carbon atoms in the alkyl group is usually from 1 to 4), of the said dicarboxylic acid with the said dihydric alcohol, or a process of reacting a halide of the said dicarboxylic acid with the said dihydric alcohol in the presence of a hydrogen recipient and the like.

A reaction product thus obtained is a mixture in which "n" is composed of various values and the hydroxyl value of these reaction products is usually in a range from 10 to 500 mg-KOH/g.

A polyester polyol comprising a compound represented in the general formula (I-a) is preferred as the plasticiser for the phenolic foam of the present invention, The polyester polyol is obtained by reacting an aromatic dicarboxylic acid with any one of ethylene glycol or 1, 4-butane diol with the molar ratio of the aromatic dicarboxylic acid to the diol being from 1 : 1.5 up to 1 : 5.0. The polyester polyol when $A^1$ containing either 1,2 phenylene group, 1,3-phenylene group, or 1,4-phenylene group is particularly preferred.

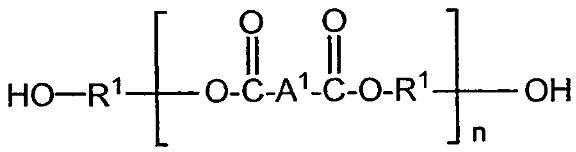

· · · (I-a)

wherein $A^1$ represents 1,2-phenylene group, 1,3-phenylene group, 1,4-phenylene group, 2,3-napthalene group, 1,4-napthalene group or 2,6-napthalene group; and $R^1$ represents -CH2CH2-, -CH2CH2OCH2CH2-, or -CH2CH2CH2CH2-; and n represents an integer equal to or more than 1.

Since the plasticiser for the phenolic foam in the present invention has a molecular structure containing both an ester backbone and a hydroxyl group, there is excellent hydrophilicity and surface activity that keeps it compatible with phenolic resin that is also hydrophilic, and so together forms a homogeneous solution. The said plasticiser is homogeneously mixed with the phenol resin. Furthermore, it is presumed that the said polyester polyol helps produce homogeneous cells in the phenolic foam making the phenolic foam more uniform.

Furthermore, it is presumed that when the said polyester polyol, which has a molecular structure with excellent surface activity, is added to a foamable phenolic resin, the polyester polyol imparts flexibility to the cell-walls of the phenolic foam. Therefore, even after extended time, degradation phenomenon such as a crack-occurrence at the cell-walls is controlled. This leads to long-term stability of thermal conductivity of the phenolic foam.

One preferred embodiment of the present invention will be described below.
The phenolic foam of the present invention includes the said polyester polyol to impart flexibility to the cell-walls of the phenolic foam, and bring long-term stability to the thermal insulation of the phenolic foam.

The phenolic foam of the present invention will next be described. A preferred phenolic resin used in the present invention is a resole resin (hereinafter, referred also to as phenolic resin material) obtained by the reaction of a phenol compound such as cresol, xylenol, para-alkylphenol, para-phenylphenol, resorcinol, and the like; with an aldehyde such as formaldehyde, paraformaldehyde, furfural, acetaldehyde and the like under a catalytic amount of an alkali such as sodium hydroxide, potassium hydroxide, calcium hydroxide, or aliphatic amines like, trimethylamine, and triethylamine. These are typical ingredients in phenolic resole resin manufacture but are not limited to just these ingredients here. The molar ratio of phenol groups to aldehyde groups is not limited. It is preferable that the molar ratio of a phenol to an aldehyde is from 1 : 1 to 1 : 3, more preferably from 1.5 to 2.5, and particularly preferable approximately 1 : 2. But the invention is not limited to these ranges.

A preferable molecular weight for a phenolic resin material is from 400 to 3,000, and more preferably from 700 to 2,000 in terms of weight average molecular weight. On the other hand, the number average molecular weight is from 150 to 1,000, and more preferably from 300 to 700 but the invention is not limited to these ranges.

The production of the phenolic foam of the present invention will be described in one preferred embodiment below.

At first, a foamable phenolic resin composition containing the said phenolic resin, surfactant, (referred also to as a cell stabiliser), plasticiser, and catalyst is prepared. The surfactant that is preferably employed includes a nonionic surface active agent such as a polysiloxane, a polyoxyethylene sorbitan, an aliphatic ester, and a castor oil-ethylene oxide adduct.

The above-mentioned polyester polyol of the present invention is used as a plasticiser. The polyester polyol is usually used in a range of 0.1 to 20 parts per 100 parts by weight of said foamable phenolic resin composition, still preferably in a range of 0.5 to 15 parts, or more preferably in a range of 1 to 12 parts. Within the above-mentioned range, flexibility to the cell-walls can be imparted without damaging other properties of the phenolic foam.

The catalyst includes an acid, for example, an inorganic acid such as sulphuric acid, phosphoric acid and the like, an organic acid such as benzene sulfonic acid, xylene sulfonic acid, paratoluene sulfonic acid, naphthol sulfonic acid, phenol sulfonic acid and the like.

The type of blowing agent to be used is not limited and blowing agents in the public domain that are used in the manufacture of phenolic foam are employed in the present invention. These include an aliphatic hydrocarbon with a low boiling point such as butane, pentane, hexane, or heptane, an ether such as isopropyl ether, a fluoride-containing hydrocarbon such as trichloromonofluoromethane, trichlorotrifluoroethane or a mixture thereof.

The surfactant, polyester polyol, and the phenolic resin are then stirred to give a mixture. This mixture is then introduced to a mixer, where the blowing agent and catalyst are added, and agitated to prepare a foamable phenolic resin composition.

The phenolic foam of the present invention is formed and moulded by using the following processes in which the foamable phenolic resin composition thus prepared is (1) discharged on to a continuous conveyer, (2) warmed and foamed partially, (3) placed in a pressurised mould, (4) discharged into a mould to give a foaming block, or (5) charged into one or more of closed cavities under high pressure and so on.

In accordance with one preferred embodiment of the present invention for producing phenolic foam, the foamable phenolic resin composition is discharged onto a continuously running carrier, passed through a heated zone (a curing oven) where the resin composition is moulded, and the desired phenolic foam product is made. More specifically, the resin composition is discharged on to the lower facing material carried on a running conveyor; there is also a top facing material for the foaming resin composition. The running foam material is passed through a curing oven where the top surface of the foam material is pressed down with a second conveyer to achieve a predetermined thickness. The blowing and curing of the foam material in the oven is carried out at a temperature from 60 to 100 °C for between 2 and 15 minutes. The phenolic foam that exits from the curing oven is cut to a predetermined length.

The facing materials used are not limited. They can be fibrous materials. They include a non-woven fabric, paper and the like made from a natural fibre, synthetic fibre, inorganic fibre, etc. The facing materials can also be metallic or plastic foils or sheets, with or without a suitable primer coating or fibrous interlayer to enhance adhesion.

A phenolic foam in which the moisture permeability coefficient for a thickness of 25mm is not more than 60 ng/($m^2$.s.Pa); and usually not more than 55 ng/($m^2$.s.Pa) is preferable.

Since the cell-walls of the phenolic foam in the present invention have flexibility, the long-term degradation over time of the phenolic foam is inhibited, so that stable insulation performance is maintained over a long time.

Evaluation methods for testing the physical properties of phenolic foam are described below. Various samples of phenolic foam were tested using these evaluation methods.

(1) Thermal Conductivity (abbreviated as TC)

A test piece of length 300 mm and width 300mm was placed between a high temperature plate with a temperature of 30°C and a low temperature plate with a temperature of 10°C in a thermal conductivity test instrument (Type HC-074 304, Koei Seiki Co., Ltd.) in which the thermal conductivity, (TC), of the test pieces was measured according to JIS A 1412.

(2) Moisture Permeability Coefficient (abbreviated as MPC) for a thickness of 25mm

This property was measured according to JIS A 9511.

Three disc shape test pieces are cut from a phenolic foam board with a thickness of 25mm and a diameter of 65 mm. The dimension of the test piece had an accuracy of 0.1 mm and the moisture permeability area of water vapour was calculated as 0.05 $cm^2$.

Moisture permeability coefficient (MPC)for a thickness of 25mm is

$$\frac{m2 - m1}{(T2\text{-}T1)A} \times \frac{1}{(P2\text{-}P1)} \times \frac{t}{25}$$

Where,

m1, m2: is the weight (ng) each for time T1 or time T2
T1, T2: is the time (s) each of the weight ml or m2
A : is the moisture permeability area ($m^2$) of water vapour of each test piece
P1 : is the vapour pressure of water (P1= 0 Pa) in a flask
P2 : is the vapour pressure (1404.4 Pa) of a thermostatic tank
t : is the thickness (mm) of a test piece

Examples

The present invention will be explained in more detail by the examples that follow, but is not limited only to these examples and comparative examples.

Example 1

A polyester polyol is obtained by reacting phthalic acid with diethylene glycol, at a molar ratio 1:2. The polyester polyol so produced has a weight average molecular weight of 450 to 500. 5 parts by weight of this polyester polyol was added to and mixed with 103 parts by weight of a resole resin PF-328, (produced by Asahi Organic Chemicals Industry Co Ltd). PF-328 resin comprises 100 parts by weight of resole prepared by reacting phenol with formaldehyde, at a molar ratio 1 : 2.0 and then 3 parts by weight of a silicone oil surfactant is mixed in to complete the PF-328 resin blend.

To the said phenolic resin mixture obtained, 8 parts by weight of pentane was added as blowing agent, and 20 parts by weight of a mixture of para-toluene sulphonic acid and xylene sulfonic acid, (weight ratio of 2:1), as catalyst, were pumped to a mixer to give a foamable phenolic resin composition The resin composition was discharged into a moulding frame laid with a glass fiber non-woven fabric. Foaming commenced, and the sample was held at 80°C for 10 minutes in an oven to give cured phenolic foam. The dimensions of the foam obtained are 300mm length, 300mm width and 25mm thickness. The properties of the foam are shown in Table 1.

Example 2

A sample of phenolic foam was prepared in the same manner as in Example 1 except that the amount of polyester polyol was changed to 2.5 parts by weight based on phenolic resin weight. The properties of the foam are shown in Table 1.

Example 3

A sample of phenolic foam was prepared in the same manner as in Example 1 except that the amount of the polyester polyol was changed to 10 parts by weight based on phenolic resin weight.
The properties of the foam are shown in Table 1.

Example 4

A sample of phenolic foam was prepared in the same manner as in Example 1 except that the polyester polyol plasticiser used was prepared by reacting phthalic acid with ethylene glycol in the molar ratio of 1 : 2. This alternate polyester polyol was added to the phenolic resin blend at a level of 10 parts by weight of phenolic resin.
The properties of the foam are shown in Table 1.

Example 5

A sample of phenolic foam was prepared in the same manner as in Example 1 except that the polyester polyol plasticiser used was prepared by reacting phthalic acid with 1,4-butane diol in the molar ratio of 1 : 2. This alternate polyester polyol was added to the phenolic resin blend at a level of 10 parts by weight of phenolic resin.

The properties of the foam are shown in Table 1.

Comparative Example 1

A sample of phenolic foam was prepared in the same manner as in Example 1 except that a plasticiser was not employed.
The properties of the foam are shown in Table 1.

Comparative Example 2

A sample of phenolic foam was prepared in the same manner as in Example 1 except that the plasticiser was changed to dioctyl phthalate using 5 parts by weight of phenolic resin.
The properties of the foam are shown in Table 1.

Comparative Example 3

A sample of phenolic foam was prepared by the same manner as in Example 1 except that a plasticiser was changed to dimethyl phthalate using 5 parts by weight of phenolic resin.

The properties of the foam samples are shown in Table 1 below.

Table I

| Example Number | Plasticiser Used | | Thermal conductivity [at 20°C] (W/m.K) | Thermal conductivity at 20°C (W/m.K) after 25 weeks at 70°C | MPC (ng/(m$^2$.s .Pa)) |
|---|---|---|---|---|---|
| | Reaction Product (Molar Ratio) | Amount (parts by weight) | | | |
| Example 1 | Phthalic acid : Diethylene glycol (1:2) | 5 | 0.0189 | 0.0209 | 40 |
| Example 2 | Phthalic acid : Diethylene glycol (1:2) | 2.5 | 0.0191 | 0.0213 | 45 |
| Example 3 | Phthalic acid : Diethylene glycol (1:2) | 10 | 0.0191 | 0.0216 | 45 |
| Example 4 | Phthalic acid : Ethylene glycol (1:2) | 5 | 0.0195 | 0.0219 | 43 |
| Example 5 | Phthalic acid: 1,4-Butane diol (1:2) | 5 | 0.0193 | 0.0219 | 50 |
| Comparative Example 1 | - | - | 0.0194 | 0.0275 | 55 |
| Comparative Example 2 | Dioctyl phthalate | 5 | 0.0250 | 0.0310 | 70 |
| Comparative Example 3 | Dimethyl phthalate | 5 | 0.0220 | 0.0280 | 70 |

As shown in Table I, the change in thermal conductivity following thermal ageing for the foam samples containing polyester polyol is much smaller than for the foam samples in the Comparative Example, It means that the degradation of the insulation performance of the samples of the invention containing the polyester polyol plasticiser is more controlled than for the samples not including polyester polyol plasticiser.

The values of moisture permeability coefficient (MPC) for 25mm thick foam samples are smaller than those of

the Comparative Examples. It means that moisture entrapment in the test specimens of the Examples of the present invention is less than moisture entrapment in the test specimens of the Comparative Examples.

When polyester polyol of the present invention is used as a plasticiser for the phenolic foam, cell walls with improved flexibility are produced. As a result, the long-term degradation with time of the said cell-walls is inhibited and therefore the lung-term insulation stability of the phenolic form is improved. The thermal insulation products of the present invention are preferably used in the fields of construction materials and so on.

## Claims

1. A phenolic foam comprising a polyester polyol as a plasticiser wherein the polyester polyol is the reaction product of a dibasic carboxylic acid with a dihydric alcohol expressed in general formula (I)

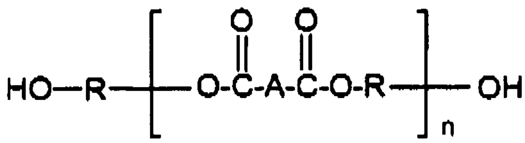

··· (I)

wherein A is a dicarboxylic acid residue containing up to two hydrogen atoms from a dibasic carboxylic acid, and R is a chemical backbone of a dihydric alcohol having up to two hydroxyl groups from a dihydric alcohol, and n is an integer equal to or more than 1, **characterised in that** the polyester polyol is the reaction product of phthalic acid and an alcohol selected from diethylene glycol, ethylene glycol, and 1, 4 - butane diol.

2. A phenolic foam as claimed in claim 1 comprising 0.1 to 20 parts by weight of the plasticiser per 100 parts by weight of phenolic resin.

3. A phenolic foam as claimed in claim 1 or 2 wherein the moisture permeability coefficient for a thickness of 25mm is not more than 60ng/($m^2$ .s.Pa) when measured according to JIS A9511.

4. A process for producing phenolic foam comprising preparing a foamable phenolic resin composition that comprises phenolic resin, surfactant, plasticiser, blowing agent, and catalyst, delivering the resin composition onto a continuously running substrate, and passing through a heated zone to produce phenolic foam as the phenolic foam is moulded into a predetermined shape **characterised in that** the plasticiser is a plasticiser as defined in claim 1.

## Patentansprüche

1. Phenolschaum, umfassend ein Polyesterpolyol als ein Plastifiziermittel, worin das Polyesterpolyol das Reaktionsprodukt einer zweibasigen Carbonsäure mit einem zweiwertigen Alkohol darstellt, der in der allgemeinen Formel (I) wie folgt ausgedrückt ist:

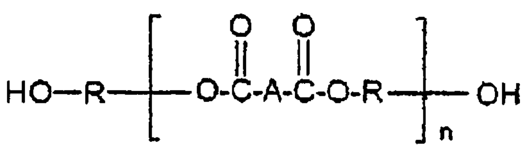

... (I)

worin A ein Dicarbonsäurerest mit bis zu zwei Wasserstoffatomen aus einer zweibasigen Carbonsäure darstellt, und R ein chemisches Rückgrat eines zweiwertigen Alkohols mit bis zu zwei Hydroxylgruppen aus einem zweiwertigen Alkohol darstellt, und n für eine ganze Zahl von gleich oder mehr als 1 steht, **dadurch gekennzeichnet, dass** das Polyesterpolyol das Reaktionsprodukt von Phthalsäure und einem Alkohol darstellt, der aus Diethylenglykol, Ethylenglykol und 1,4-Butandiol ausgewählt ist.

**2.** Phenolschaum nach Anspruch 1, umfassend 0,1 bis 20 Gewichtsteile des Plastifiziermittels pro 100 Gewichtsteile Phenolharz.

**3.** Phenolschaum nach Anspruch 1 oder 2, worin der Feuchtedurchlässigkeitskoeffizient für eine Dicke von 25 mm nicht mehr als 60 ng/($m^2$.s.Pa) beträgt, wenn er nach JIS A9511 gemessen wird.

**4.** Verfahren zum Herstellen von Phenolschaum, das Folgendes umfasst: Aufbereiten einer schäumbaren Phenolharzzusammensetzung, die Phenolharz, Tensid, Plastifiziermittel, Treibmittel und einen Katalysator umfasst, Abgeben der Harzzusammensetzung auf ein kontinuierlich laufendes Substrat und Passieren durch eine erhitzte Zone zur Herstellung von Phenolschaum, während der Phenolschaum in eine prädeterminierte Form geformt wird, **dadurch gekennzeichnet, dass** das Plastifiziermittel ein Plastifiziermittel wie nach Anspruch 1 definiert darstellt.

## Revendications

**1.** Mousse phénolique comprenant un polyester polyol comme plastifiant, dans laquelle le polyester polyol est le produit de réaction d'un acide carboxylique dibasique avec un alcool dihydrique exprimé dans la formule générale (I)

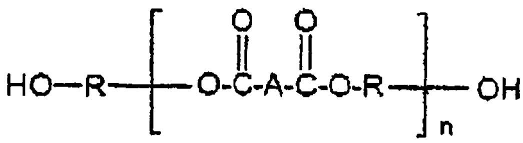

... (I)

dans laquelle A est un résidu d'acide dicarboxylique renfermant jusqu'à deux atomes d'hydrogène d'un acide carboxylique dibasique et R est un squelette chimique d'un alcool dihydrique ayant jusqu'à deux groupements hydroxyle d'un alcool dihydrique et n est un entier égal ou supérieur à 1, **caractérisée en ce que** le polyester polyol est le produit de réaction d'acide phtalique et d'un alcool choisi parmi le diéthylèneglycol, l'éthylèneglycol et le 1,4-butanediol.

**2.** Mousse phénolique selon la revendication 1, comprenant de 0,1 à 20 parties en poids du plastifiant pour 100 parties en poids de résine phénolique.

**3.** Mousse phénolique selon la revendication 1 ou 2, dans laquelle le coefficient de perméabilité à l'humidité pour une épaisseur de 25 mm n'est pas supérieur à 60 ng/($m^2$.s.Pa) lorsqu'il est mesuré selon JIS A9511.

**4.** Procédé de production d'une mousse phénolique comprenant la préparation d'une composition de résine phénolique expansible comprenant une résine phénolique, un tensioactif, un plastifiant, un agent gonflant et un catalyseur, la délivrance de la composition de résine sur un substrat se déroulant en continu et le passage à travers une zone chauffée afin de produire une mousse phénolique alors que la mousse phénolique est moulée en une forme prédéterminée, **caractérisé en ce que** le plastifiant est un plastifiant tel que défini dans la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 59062615 A
- JP 2003183439 A
- GB 758562 A
- EP 0579321 A